Europäisches Patentamt

**European Patent Office**

Office européen des brevets

(19)

(11) Publication number: **0 059 695**

**A1**

(12) # EUROPEAN PATENT APPLICATION

(21) Application number: **82850020.7**

(22) Date of filing: **11.02.82**

(51) Int. Cl.³: **G 05 D 11/02**

(30) Priority: **24.02.81 SE 8101190**

(43) Date of publication of application:
**08.09.82 Bulletin 82/36**

(84) Designated Contracting States:
**AT BE CH DE FR GB IT LI NL**

(71) Applicant: **Västregärds Industri AB**
**Box 8**
**S-360 73 Lenhovda(SE)**

(72) Inventor: **Samuelsson, Kennerth**
**Marknadsvägen 16**
**S-360 42 Braas(SE)**

(74) Representative: **Linde, Leif**
**Vernamo Patentbyrä AB P.O. Box 1**
**S-270 11 Abbekas(SE)**

(54) **A device for preparing a cleaning liquid, a degreasing liquid or the like.**

(57) The present invention relates to a device for preparing a cleaning liquid, a degreasing liquid or the like by mixing at least two liquids, for example water and a concentrate of cleaning or degreasing agent, with each other.

The device comprises a mixing tank (2), a first conduit (8) connected with the tank for supplying the first liquid to the tank and a second conduit connected with the tank for supplying the second liquid to the tank. The device comprises first level sensor means (14) for sensing a lower liquid level in the tank and second level sensor means (16) for sensing an upper liquid level in the tank. A valve (18) is provided in the first conduit (8) for opening this conduit when the first level sensor means (14) senses that the lower liquid level has been reached and close the conduit (8) when the second level sensor means (16) senses that the upper liquid level has been reached. A metering device (20, 22) is adapted to supply to the tank (2) a controlled amount of the second liquid while the valve in the first conduit (8) is in its open position.

The present invention relates to a device for preparing a cleaning liquid, a degreasing liquid or the like by mixing at least two liquids, for example water and a concentrate of cleaning or degreasing agents, with each other.

In many places, for example garages, there are required supplies of ready-mixed liquids for cleaning, degreasing and similar purposes. Such liquids are usually prepared by filling up a mixing tank with water whereupon a concentrate of cleaning or degreasing agent is poured into the tank and the content is mixed. It is true that it is possible to provide in this simple way a cleaning or degreasing liquid having a correct content of cleaning or degreasing agent, but in practice it has proved that the addition of the concentrate of cleaning or degreasing agent usually takes place more or less at random, whereby there is usually used an amount of concentrate which is too large. This fact does not only provide for an unnecessary great consumption of cleaning or degreasing agent but also for a less good result of the cleaning and degreasing operations.

It is true that it is previously known to use automatically operating devices for preparing the cleaning liquid or the degreasing liquid but these previously known devices are complicated and expensive. Therefore, the previously known devices have not been used in any extensive degree, as there is of course a substantial resistance against the use of a complicated and expensive equipment for such a simple object as mixing liquids in controlled amounts with each other.

The object of the present invention is to provide a device for preparing a cleaning liquid, which in spite of a simple and cheap construction automatically provides a cleaning liquid, a degreasing liquid or the like having correct amounts of included components.

In order to comply with this object there is according to the invention provided a device for preparing a cleaning liquid, a degreasing liquid or the like by mixing at least two liquids, for example water and a concentrate of cleaning or degreasing agent, with each other, the device comprising a mixing tank, a first conduit connected with the tank for supplying one of the liquids to the tank and a second conduit connected with the tank for supplying the other liquid to the tank, the device being characterized by first level sensor means for sensing a lower liquid level in the tank, second level sensor means for sensing an upper liquid level in the tank, a valve positioned in said first conduit, which is adapted to open said first conduit when said first level sensor means senses that the lower liquid level has been reached for providing a supply of the first liquid to the tank and which is adapted to close said first conduit, when the second level sensor means senses that the upper liquid level has been reached, and a metering device which is adapted to supply to the tank a controlled amount of said second liquid through the second conduit when the valve in the first conduit is in its open position.

In an embodiment of the device according to the invention it is preferred that the valve in the first conduit is constituted by a magnet valve controlled by a level sensor means and that the metering device is constituted by a piston pump which is adapted to pump a predetermined amount of liquid per unit of time and a device for controlling the operation time of the piston pump. Suitably the control device of the piston pump is connected with the first level sensor means for starting the piston pump when the first level sensor means senses that the lower liquid level has been reached and the control device comprises an electronic counter which is adapted to cause the control device to stop the piston pump when a preset time from the start of the piston pump has elapsed.

A device of this kind will be operated in a completely automatic way so that the tank is automatically filled up with cleaning or degreasing liquid of a correct composition, when the liquid amount in the tank has been lowered to the level of the lower level sensor means.

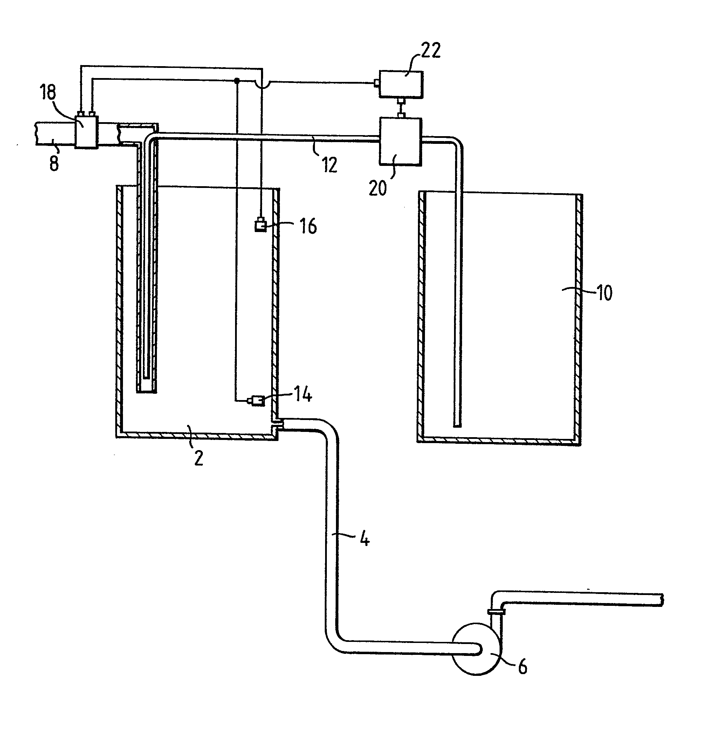

The invention is described in the following with reference to the accompanying drawing which schematically shows an embodiment of a device according to the invention.

In the drawing the reference numeral 2 relates to a tank for cleaning or degreasing liquid. The tank 2 is at its bottom provided with an outlet conduit 4 extending to a pump 6 for pumping the cleaning or degreasing liquid to the place where the liquid is to be used, for example a work place for cleaning operations. The cleaning or degreasing liquid in the tank 2 consists of a concentrate of cleaning or degreasing agent mixed with water. The water is supplied to the tank 2 through a conduit 8 which suitably is connected directly with the water mains. The concentrate of cleaning or degreasing agent is supplied to the tank 2 from a barrel 10 through a conduit 12, which extends into the conduit 8 so that the outlet of the conduit 12 is positioned inside the conduit 8. This provides for a sufficient mixing of the liquids with each other when water and concentrate are supplied to the tank 2.

In the tank 2 there is provided a first level sensor means 14 for sensing a lower liquid level in the tank and a second level sensor means 16 for sensing an upper liquid level in the tank 2. In the conduit 8 there is provided a magnet valve 18 which is connected with the level sensor means 14 and 16 in such a way that the magnet valve is opened when the level sensor means 14 senses that the lower liquid level has been reached, and is closed when the level sensor means 16 senses that the upper liquid level has been reached.

For supplying the concentrate of cleaning or degreasing agent from the barrel 10 to the tank 2 there is utilized a piston pump 20 positioned in the conduit 12. To the piston pump 20 there is connected a control device 22 comprising an electronic counter which is adjustable for determining the time during which the piston pump 12 shall be operated at each operation cycle. The control device 22 is connected with the level sensor means 14 for starting the piston pump when the sensor means 20 senses that the lower liquid level in the tank 2 has been reached. Because of the fact that the piston pump 20 works in such a way that it delivers a predetermined liquid amount per unit of time the pump 20 and the control device 22 will constitute a metering device which at each operational cycle delivers a predetermined amount of concentrate of cleaning or degreasing agent to the tank 2.

When the cleaning liquid or degreasing liquid in the tank 2 has been consumed by being pumped out from the tank 2 through the line 4 to such a degree that the level of the lower level sensor means 14 has been reached, the magnet valve 18 opens the conduit 8 at the same time as the control device 22 starts up the piston pump 20. Thereby water from the conduit 8 and a concentrate of cleaning or degreasing agent from the conduit 12 will at the same time flow into the tank 2. When the piston pump 20 has been operated for a time which is required for supplying to the tank 2 the desired amount of concentrate of cleaning or degreasing agent the piston pump 20 is stopped by the control device 22. The water continues to flow into the tank 2 through the line 8 until the level of the upper level sensor means 16 has been reached. When this occurs the magnet valve 18 is closed. In this simple and reliable way the tank has automatically been filled up with cleaning or degreasing liquid having the correct composition.

0059695

The invention can be modified within the scope of the following claims.

CLAIMS

1.  A device for preparing a cleaning liquid, a degreasing or the like by mixing at least two liquids, for example water and a concentrate of cleaning or degreasi agent, with each other, comprising a mixing tank (2), a first conduit (8) connect with the tank for supplying the first liquid to the tank and a second conduit (12 connected with the tank for supplying the second liquid to the tank, c h a r a c t e r i z e d by first level sensor means (14) for sensing a lower liquid level in the tank (2), by second level sensor means (16) for sensing an upper liquid level in the tank, by a valve (18) positioned in the first conduit (8), which is adapted to open the first conduit when the first level sensor means (14) senses that the lower liquid level has been reached for providing the supply of the first liquid to the tank and which is adapted to close the first conduit when the second level sensor means (16) senses that the upper liquid level has been reached, and by a metering device (20, 22) which is adapted to supply to the tank a controlled amount of the second liquid through the second conduit (12) when the valve (18) in the first conduit is in its open position.

2.  A device as claimed in claim 1, c h a r a c t e r i z e d in that the valve (18) in the first conduit (8) is constituted by a magnet valve controlled by the level sensor means (14, 16).

3.  A device as claimed in any of claims 1 and 2, c h a r a c t e r i z e d in that the metering device (20, 22) is constituted by a piston pump (20) which is adapted to pump a predetermined amount of liquid per unit of time and a device (22) for controlling the operation time of the piston pump.

4.  A device as claimed in claim 3, c h a r a c t e r i z e d in that the control device (22) of the piston pump is connected with the first level sensor means (14) for starting the piston pump (20) when the level sensor means senses that the lower liquid level has been reached and that the control device comprise an electronic counter which is adapted to cause the control device to stop the piston pump when a predetermined time from the start of the piston pump has elapsed.

## DOCUMENTS CONSIDERED TO BE RELEVANT

| Category | Citation of document with indication, where appropriate, of relevant passages | Relevant to claim |
|---|---|---|
| P,A | US - A - 4 252 139 (DAVIS) (24-02-1981) <br><br> + Abstract; column 1, lines 25-35; column 1, line 60 - column 2, line 13; fig. 1 + <br><br> -- | 1 |
| Y | GB - A - 767 279 (STANDARD-TOCH) <br><br> + Page 1, lines 20-30; page 1, lines 53-67; claim 1 + <br><br> -- | 1 |
| Y | GB - A - 810 554 (ROBERTSHAW) <br><br> + Claim 1; fig. 2 + <br><br> -- | 1 |
| A | US - A - 3 280 941 (FISCHER) <br><br> + Column 1, lines 22-34; column 2, line 31 - column 3, line 2; fig. 2 + <br><br> -- | |
| A | US - A - 3 023 848 (OSTERMAN) <br><br> + Column 1, lines 23-43; column 3, line 75 - column 4, line 11; fig. 2 + <br><br> ---- | |

**CLASSIFICATION OF THE APPLICATION (Int. Cl. 3)**

G 05 D 11/02

**TECHNICAL FIELDS SEARCHED (Int.Cl. 3)**

G 05 D 11/00
G 05 D 9/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims |
|---|---|

| Place of search | Date of completion of the search | Examiner |
|---|---|---|
| VIENNA | 23-06-1982 | TOMASELLI |

EPO Form 1503.1 06.78